# EUROPÄISCHE PATENTSCHRIFT

(11) **EP 0 673 700 B1**
(45) Veröffentlichungstag und Bekanntmachung des Hinweises auf die Patenterteilung: **17.09.1997**
(21) Anmeldenummer: 95100644.4
(22) Anmeldetag: 19.01.1995
(51) Int. Cl.: B23D 77/00

(54) **Reibahle**
Reamer
Alésoir

(30) Priorität: 23.02.1994 DE 4405749
(43) Veröffentlichungstag der Anmeldung: 27.09.1995
(73) Patentinhaber: MAPAL Fabrik für Präzisionswerkzeuge Dr. Kress KG, D-73431 Aalen (DE)
(72) Erfinder:
(74) Vertreter: Gleiss, Alf-Olav, Dr.jur. Dipl.-Ing.

(56) Entgegenhaltungen:
- DE-A- 4 102 716
- DE-A- 4 320 409
- GB-A- 1 007 715
- US-A- 3 645 642
- MACHINES & TOOLING, Bd. 47, Nr. 6, 1.Juni 1976 - 30.Juni 1976 Seiten 21-23, MESHCHERYAKOV 'single cutting edge carbide reamers for precision holes '

## Beschreibung

Die Erfindung betrifft eine Reibahle mit mindestens einer Messerplatte und mit Zwei dieser zugeordneten Führungsleisten gemäß Oberbegriff des Anspruchs 1 und wie, beispielweise, aus der DE-A-4102716 bekannt.

Reibahlen der hier angesprochenen Art dienen der Feinstbearbeitung von Bohrungsoberflächen mit dem Ziel, eine sehr exakte Bohrungsgeometrie bei sehr hoher Oberflächengüte zu erreichen. Daher sind Reibahlen dieser Art mit zwei Führungsleisten ausgestattet, die, ebenso wie die Messerplatte, in Nuten eingesetzt sind, die in die Umfangsfläche der Reibahle eingebracht sind. Die mit der Bohrungswandung in Eingriff tretende Haupt- und Nebenschneide der Messerplatte steht etwas mehr über die Oberfläche der Reibahle hinaus, als die Oberflächen der Führungsleisten. Diese Anordnung dient dazu, zu hohe Druckkräfte auf die Oberfläche der Führungsleisten zu vermeiden, so daß diese die bearbeitete Bohrungswandung nicht beschädigen, aber andererseits das Werkzeug optimal in der Bohrung führen.

Es ist eine grundlegende Erkenntnis bei der Oberflächenbearbeitung von Bohrungen, daß nach dem ersten Einsetzen einer Messerplatte in die Reibahle, während der anfänglichen Bearbeitung von Bohrungen, ein sogenannter Anfangsverschleiß auftritt, der wesentlich höher ist, als der sich danach einstellende Verschleiß. Es ist daher einerseits erforderlich, den Überstand der Messerplatte über die Oberfläche des Grundkörpers der Reibahle nach einer gewissen Zeit nachzustellen, um den Anfangsverschleiß auszugleichen und die gewünschten Bohrungsmaße zu erhalten.

Während der ersten Bearbeitung von Bohrungsoberflächen steht die Messerplatte weiter über die Oberfläche der Führungsleisten hinaus als dies nach eintreten des Anfangsverschleisses der Fall ist. Dadurch ergibt sich eine relativ ungenaue Führung der Reibahle innerhalb der zu bearbeitenden Bohrung, so daß die Geometrieeigenschaften, beispielsweise die Rundheit der Bohrung, aber auch die Oberflächengüte der zu bearbeitenden Bohrung nicht die gewünschte Anforderung erfüllen kann. Während des höheren Anfangsverschleisses lassen sich also bezüglich der Bohrungsgeometrie und der Bohrungsoberflächengüte keine besonders hohen Anforderungen erfüllen, es sei denn, man nimmt sehr häufige Nachstellungsarbeiten zum Ausgleich des Anfangsverschleisses in Kauf, was zu einer sehr unwirtschaftlichen Arbeitsweise führt.

Es ist daher Aufgabe der Erfindung, eine Reibahle zu schaffen, die die hier genannten Nachteile nicht aufweist, bei der insbesondere der Anfangsverschleiß praktisch nicht größer ist als der sich später einstellende Verschleiß.

Diese Aufgabe wird bei einer Reibahle gelöst, die die in Anspruch 1 genannten Merkmale aufweist. Dadurch, daß ein zusätzlicher Freiflächenbereich vorgesehen ist, der sich unmittelbar an die Nebenschneide anschließt und einen sehr flachen Freiwinkel aufweist, ergibt sich im Bereich der Nebenschneide der Messerplatte eine zusätzliche Führungsfläche, so daß sich die Reibahle außer an den Führungsleisten auch hier während der Oberflächenbearbeitung einer Bohrung abstützen kann. Dies führt zu einem sehr ruhigen und gleichmäßigen Lauf des Werkzeugs innerhalb der Bohrung, so daß der Verschleiß der Messerplatte während der Bearbeitung von Bohrungen sehr gleichmäßig ist. Insbesondere der während der ersten Bearbeitung von Bohrungen bei bekannten Werkzeugen ersichtliche wesentlich höhere Anfangsverschleiß läßt sich auf diese Weise praktisch ganz vermeiden. Es bedarf also nach dem ersten Einsatz der Reibahle keiner Nachstellarbeiten, wie dies bei herkömmlichen Werkzeugen der Fall ist.

Besonders bevorzugt wird ein Ausführungsbeispiel der Reibahle, bei dem der Freiwinkel des zusätzlichen Freiflächenbereichs etwa 1° beträgt. Das heißt, von der Nebenschneide aus fällt die Freifläche -entgegen der Drehrichtung des Werkzeugs gesehen- um 1° ab. Dieser flache Abfall der Freifläche führt dazu, daß diese bei der Bearbeitung einer Bohrung als Führungsfläche für die Messerplatte und damit für das gesamte Werkzeug dient.

Weiterhin wird ein Ausführungsbeispiel der Reibahle bevorzugt, das sich dadurch auszeichnet, daß die - quer zum Verlauf der Nebenschneide gemessene-Breite des zusätzlichen Freiflächenbereichs vorzugsweise 8/100 mm beträgt. Auf diese Weise ist sichergestellt, daß durch den zusätzlichen Freiflächenbereich keine zu hohen Druckkräfte auf die Oberfläche der zu bearbeitenden Bohrung entstehen.

Bevorzugt wird weiterhin ein Ausführungsbeispiel der Reibahle, deren Messerplatte als Wendeplatte ausgebildet ist. Diese Ausgestaltung ermöglicht es, bei einem Verschleiß der Messerplatte diese aus dem Werkzeug herauszunehmen und nach einer Drehung um 180° wieder in das Werkzeug einzusetzen, wobei die der bisherigen Haupt- und Nebenschneide gegenüberliegende Kante der Messerplatte nunmehr als neue Haupt- und Nebenschneide dienen kann.

Schließlich wird eine Ausführungsform der Reibahle bevorzugt, bei der die Messerplatte als Sechseck ausgebildet ist. Es ergeben sich hier sechs Haupt- und Nebenschneiden, so daß das relativ teure Material der Messerplatte mehrfach genutzt werden kann.

Weitere Ausgestaltungen ergeben sich aus den übrigen Unteransprüchen.

Die Erfindung wird im folgenden anhand der Zeichnung näher erläutert. Es zeigen:
- Figur 1: eine Draufsicht auf die Vorderseite eines ersten Ausführungsbeispiels einer Messerplatte;
- Figur 2: einen Querschnitt durch die in Figur 1 gezeigten Messerplatte entlang der Linie II-II;
- Figur 3: eine stark vergrößerte Teilansicht der Schneidkante der in den Figuren 1 und 2 dargestellten Messerplatte;
- Figur 4: eine stark schematisierte Draufsicht auf die Vorderseite eines weiteren Ausführungsbeispiels einer Messerplatte;
- Figur 5: eine Ansicht der Vorderseite einer Einmesser-Reibahle;
- Figur 6: ein Diagramm, in dem das über dem vorgewählte Maß der zu bearbeitenden Bohrung über dem Standweg einer Messerplatte gemäß Figur 1 eingetragen ist;
- Figur 7: ein Diagramm, aus dem die mit einer erfinderischen Reibahle erzielbare Bohrungsoberfläche ersichtlich ist und
- Figur 8: ein Diagramm, bei dem das mit einer herkömmlichen Reibahle erzielte Bohrungsmaß über dem Standweg des Werkzeugs eingetragen ist.

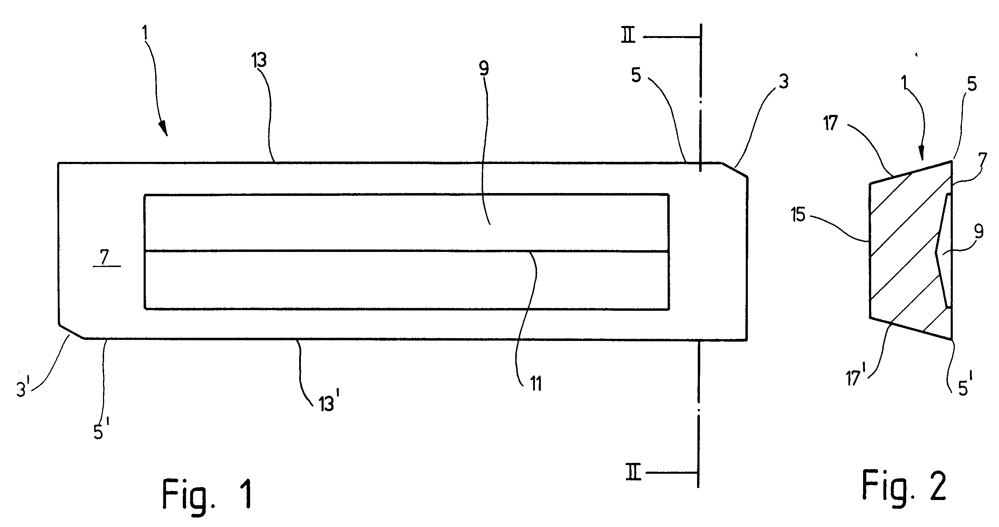

Figur 1 zeigt eine im wesentlichen rechteckförmige Messerplatte 1 in der Draufsicht, wobei hier eine Vorderseite beziehungsweise eine Messerbrust 7 erkennbar ist. Die rechte obere Kante der Messerplatte 1 ist abgeschrägt. Es liegt hier eine Hauptschneide 3 vor, an die sich eine Nebenschneide 5 anschließt, die entlang der Längskante der Messerplatte 1 verläuft. Bei der Bearbeitung einer Bohrung wird die Messerplatte 1 so in der Reibahle festgespannt, daß die Hauptschneide 3 als erstes in die zu bearbeitende Bohrung eintritt und Material von der Bohrungswandung abträgt. Die Feinstbearbeitung der Bohrungsoberfläche erfolgt dann im Bereich der Nebenschneide 5. Bei der Bearbeitung der Bohrung mittels der hier gezeigten Messerplatte 1 werden Späne mit einer Dicke von ca. 1,5/10 mm abgetragen.

Die Messerplatte 1 ist hier als Wendeplatte ausgebildet. Das heißt, der Hauptschneide 3 diagonal gegenüberliegend angeordnet findet sich eine weitere Hauptschneide 3', an die sich eine entsprechende Nebenschneide 5' anschließt. Sollten Haupt- und Nebenschneide 3 und 5 verschliessen sein, kann die Messerplatte 1 um 180° gedreht in die Reibahle eingesetzt werden, so daß die bis dahin ungenutzten Haupt- und Nebenschneiden 3' und 5' eingesetzt werden können.

In die Messerbrust 7 ist eine Spannkerbe 9 eingebracht, die im wesentlichen V-förmig ausgebildet ist. Der tiefste Punkt der V-förmigen Spannkerbe 9 ist durch eine Linie 11 angedeutet. In die Spannkerbe 9 greift in bekannter Weise eine Spannpratze ein, durch die die Messerplatte 1 in einer in die Umfangsfläche der Reibahle eingebrachten Nut gehalten wird.

Aus Gründen der Übersichtlichkeit ist in Figur 1 nicht weiter dargestellt, daß entlang von Längskanten 13 und 13' in die Messerbrust 7 Spannleitflächen eingebracht sein können, die der Beeinflussung der von der Bohrungswand abgetragenen Späne dienen.

Figur 2 zeigt eine stark schematisierte Stirnansicht der Messerplatte 1, aus der deren Grundaufbau ersichtlich ist. Wesentlich ist, daß die Breite der Messerbrust 7 größer ist als die Breite einer Rückseite 15 der Messerplatte 1. Die sich an die Nebenschneide 5 beziehungsweise 5' anschließenden Flächen werden als Freiflächen 17 und 17' bezeichnet. Insgesamt ist erkennbar, daß der Querschnitt der Messerplatte 1 im wesentlichen trapezförmig ist.

Durch eine gestrichelte Linie ist in Figur 2 die Spannkerbe 9 angedeutet.

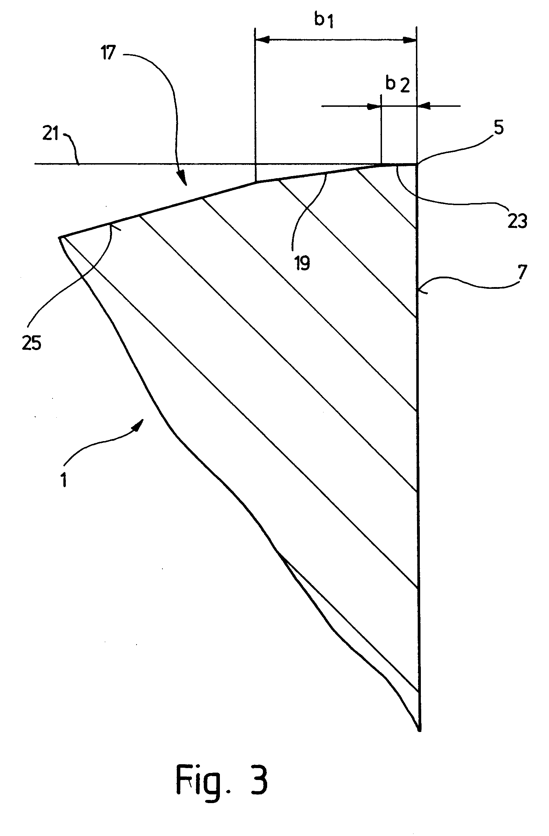

Figur 3 zeigt einen stark vergrößerten Querschnitt durch die Messerplatte 1 im Bereich der Nebenschneide 5. Durch die Vergrößerung wird deutlich, daß die Freifläche 17 mehrere Bereiche aufweist:

Deutlich erkennbar ist ein erster Freiflächenbereich 19, der -von der Nebenschneide 5 aus gesehennach links gegenüber einer gedachten horizontalen Linie 21 unter einem Winkel von ca. 7° abfällt. Der erste Freiflächenbereich 19 reicht nicht bis an die Nebenschneide 5 heran. Es ist hier unmittelbar angrenzend an die Nebenschneide 5 ein zweiter zusätzlicher Freiflächenbereich 23 vorgesehen, dessen als Freiwinkel bezeichneter Neigungswinkel wesentlich kleiner ist als der des ersten Freiflächenbereichs 19. Der Freiwinkel des zusätzlichen Freiflächenbereichs 23 beträgt vorzugsweise 1°. Er kann im Bereich von 0,5° bis 1,5° liegen.

An den ersten Freiflächenbereich 19 schließt sich ein dritter Freiflächenbereich 25 an, der unter einem größeren Freiwinkel von beispielsweise 15° gegenüber der gedachten horizontalen Linie 21 abfällt, als der erste Freiflächenbereich 19.

Aus der in Figur 3 wiedergegebenen Darstellung ist erkennbar, daß die Nebenschneide 5 der Schnittlinie zweier Ebenen entspricht, von der die erste Ebene mit der Messerbrust 7 zusammenfällt, und die zweite Ebene mit dem zusätzlichen Freiflächenbereich 23 zusammenfällt.

Die von der Nebenschneide 5 aus gemessene Breite b₂ des zweiten zusätzlichen Freiflächenbereichs 23 beträgt vorzugsweise 8/100 mm. Sie kann in einem Bereich von zirka 6/100 mm bis maximal 1/10 mm liegen.

Die von der Nebenschneide 5 ausgemessene Gesamtbreite b₁ des ersten Freiflächenbereichs 19 beträgt beispielsweise 0,8 bis 1 mm, wobei dieses Maß die Breite b₂ mit einschließt. Der dritte Freiflächenbereich 25 erstreckt sich durchgehend bis zur Rückseite 15 der Messerplatte 1.

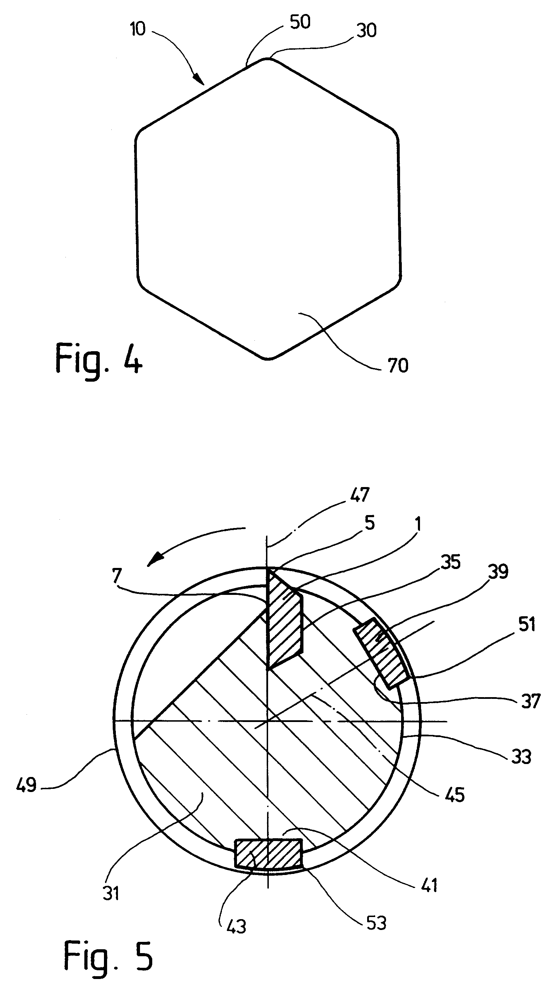

Figur 4 zeigt stark schematisiert die Draufsicht auf die Vorderseite einer Messerplatte 10, die als Vieleck, hier als Sechseck ausgebildet ist. Jeweils im Bereich einer Ecke sind eine Hauptschneide 30 und eine daran angrenzende Nebenschneide 50 vorgesehen, so daß die hier gezeigte Messerplatte 10 insgesamt sechs Haupt- und sechs Nebenschneiden aufweist. Auf der Vorderseite 70 der Messerplatte 10 können Spannkerben vorgesehen sein, die der Befestigung der Messerplatte 10 in einer geeigneten Nut dienen, die in dem Grundkörper einer zugehörigen Reibahle eingebracht ist.

Die im Bereich der Nebenschneide 50 vorgesehenen Freiflächenbereiche sind identisch ausgebildet, wie bei der Messerplatte 1, so daß insofern auf den vergrößerten Querschnitt gemäß Figur 3 verwiesen werden kann. Das heißt also, an die Nebenschneide 50 grenzt der zusätzliche Freiflächenbereich 23 an, der einen Freiwinkel von 1° aufweist. Daran schließt sich der erste Freiflächenbereich 19 mit einem Freiwinkel von 7° an. Dieser geht schließlich in den dritten Freiflächenbereich 25 mit einem Freiwinkel von 15° über.

Figur 5 zeigt eine schematische Draufsicht auf die Stirnseite einer Reibahle 31, in deren Umfangswandung 33 eine erste Nut 35 zur Aufnahme der Messerplatte 1, eine zweite Nut 37 zur Aufnahme einer ersten Führungsleiste 39 und eine dritte Nut 41 zur Aufnahme einer zweiten Führungsleiste 43 eingebracht sind. Die gedachte Mittelachse 45 der ersten Führungsleiste 39 schließt mit einer gedachten Senkrechten 47, die durch die Nebenschneide 5 der Messerplatte 1 verläuft, einen Winkel von ca. 40° ein. Die zweite Führungsleiste 43 liegt diametral der Messerplatte 1 gegenüber.

Die bei der Bearbeitung einer Bohrung gegebene Drehrichtung der Reibahle 31 ist in Figur 5 durch einen Pfeil angedeutet. Bei dieser Drehung tragen die Haupt- und Nebenschneide 3 und 5 der Messerplatte 1 Späne von der Bohrungswandung ab.

Bei einer Rotation der Reibahle 31 folgt die äußerste Kante der Messerplatte 1 einem sogenannten Flugkreis 49, dessen Durchmesser größer ist, als der durch die äußeren Oberflächen der Führungsleisten 39 und 43 gegebene Kreis. Das heißt, die Messerplatte 1 steht über die Umfangswandung 33 der Reibahle 31 -in radialer Richtung gesehen- weiter vor als die Oberfläche der Führungsleisten 39 und 43.

Bei der Bearbeitung einer Bohrung werden in die Hauptschneide 3 und in die Nebenschneide 5 der Messerplatte 1 Kräfte in die Reibahle 31 eingeleitet, so daß diese eine Kippbewegung durchführt, aufgrund derer eine nacheilende Kante 51 der ersten Führungsleiste 39 und eine voreilende Kante 53 der zweiten Führungsleiste 43 mit der Bohrungswandung in Berührung kommen. Dabei ist allerdings davon auszugehen, daß die Kanten 51 und 53 jeweils als abgerundeter Bereich ausgebildet sind, so daß bei der Abstützung der Reibahle 31 keine Beschädigungen der zu bearbeitenden Bohrungsoberfläche auftreten. Bei der Kippbewegung der Reibahle 31 wird die Messerbrust 7 aus der Senkrechten 47 verschwenkt, so daß die Freifläche 17 näher an die Wandung der zu bearbeitenden Bohrung heranbewegt wird. Es ist ersichtlich, daß die Freifläche 17 dazu dient, eine Berührung mit der Bohrungswandung zu vermeiden und damit eine Beschädigung der zu bearbeitenden Bohrungswandung.

Der zusätzliche Freiflächenbereich 23 der Messerplatte 1 dient quasi als Anlagefläche und damit als zusätzliche Führung der Reibahle 31 in der zu bearbeitenden Bohrung. Die Reibahle 31 liegt damit einerseits mit dem zusätzlichen Freiflächenbereich 23, andererseits mit der ersten Führungsleiste 39 und schließlich mit der zweiten Führungsleiste 43 an der Bohrungswandung an.

Durch die spezielle Ausgestaltung der Freifläche 17 ergibt sich eine exakt definierte Anlagefläche im Bereich der Messerplatte 1. Dasselbe gilt nach allem auch, wenn die Messerplatte als Sechseck ausgebildet ist, also die in Figur 4 dargestellte Form aufweist.

Die Reibahle 31 wird aufgrund der speziell ausgebildeten Messerplatte in der zu bearbeitenden Bohrung optimal geführt, so daß sich eine hervorragende Bohrungsgeometrie und besonders gute Oberflächengüte einstellen.

Das Werkzeug läuft in der zu bearbeitenden Bohrung sehr ruhig, so daß auch der Anfangsverschleiß auf ein Minimum reduziert wird. Bei der Einstellung des Überstandes der aktiven Schneide der Messerplatte gegenüber den Führungsleisten bedarf es nicht mehr der Berücksichtigung des herkömmlichen Anfangsverschleisses. Durch den geringen Überstand wird die oben beschriebene Kippbewegung der Reibahle 31 in der Bohrung reduziert, wodurch die Bohrungsgeometrie und deren Oberflächengüte zusätzlich verbessert werden.

Durch die besondere Ausgestaltung der Freifläche der Messerplatte 1 wird nach allem der über den üblichen Verschleiß der Messerplatte 1 hinausgehende Anfangsverschleiß vermieden, so daß außer den genannten Vorteilen zusätzlich festzuhalten ist, daß Nachstellarbeiten an der Reibahle 31 während der Bearbeitung vermieden werden können. Es ist hier festzuhalten, daß die Messerplatte 1 so im Grundkörper der Reibahle 31 befestigt ist, daß der durch die aktive Schneide und durch die gegenüberliegende Führungsleiste 43 gegebene Außendurchmesser der Reibahle 31 einstellbar ist.

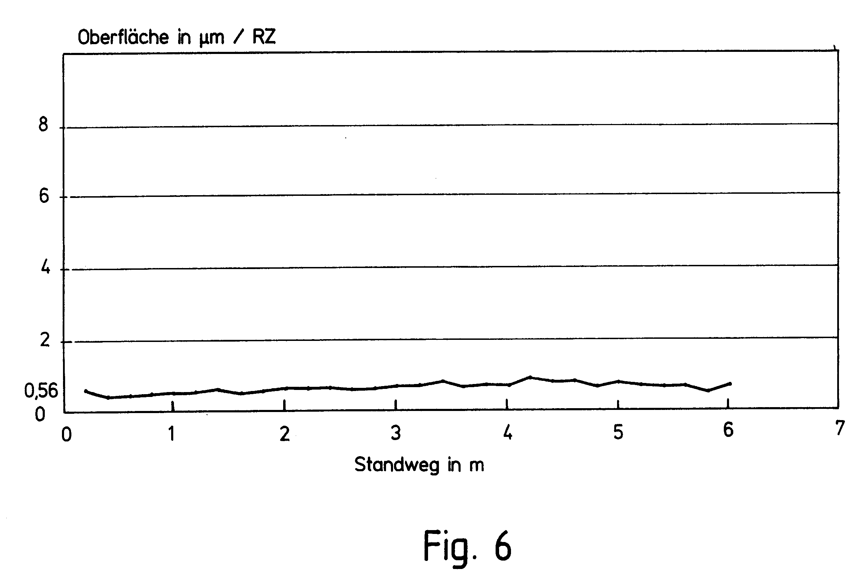

Zur Verdeutlichung der hier dargelegten Vorteile der Reibahle 31 wird hier auf Figur 6 verwiesen, in der ein Diagramm wiedergegeben ist, in dem die Rauheit RZ über dem in m gemessenen Standweg wiedergegeben ist. Es ist ersichtlich, daß die Oberflächengüte bei einem Standweg von 6 m praktisch gleich bleibt. Insbesondere zeigt sich, daß nach dem ersten Einsatz der Reibahle 31, also bis zum Erreichen eines Standweges von ca. 1 m bis zu einem Standweg von 6 m praktisch keine größeren Änderungen der Rauheit gegeben sind.

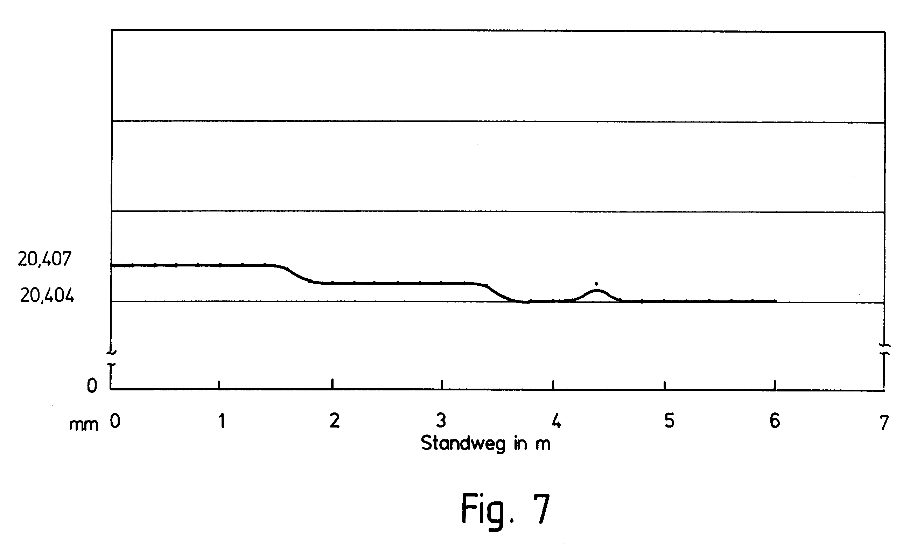

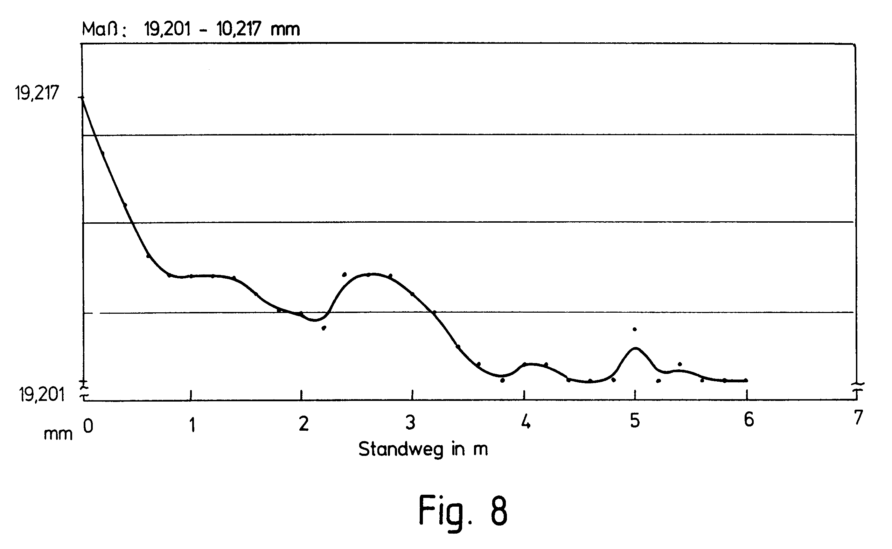

Dasselbe ergibt sich bei der Betrachtung des mit der Reibahle 31 erzielbaren Bohrungsdurchmessers, was anhand von Figur 7 näher erläutert wird. Diese Figur zeigt in einem Diagramm den Bohrungsdurchmesser über den in m gemessenen Standweg. Es zeigt sich, daß der Bohrungsdurchmesser während des gesamten Standweges von einem hier beispielhaft vorgegebenen Wert von 20,407 mm im Laufe des Einsatzes des Werkzeuges auf 20,404 mm abnimmt, wobei insbesondere während des ersten Einsatzes des Werkzeuges praktisch kein Anfangsverschleiß erkennbar ist. Anhand von Figur 8 wird beispielhaft dargestellt, daß das mit einer herkömmlichen Reibahle erzielbare Bohrungsmaß während eines Standwegs von 6 m stark abnimmt. Dabei ist besonders deutlich ein Anfangsverschleiß erkennbar, der bis zum Erreichen des Standweges von 1 m auftritt und der eine Nachstellung des Außenradius des Werkzeugs unbedingt erforderlich macht.

Der Vergleich der Figuren 7 und 8 zeigt besonders deutlich, daß durch die Ausgestaltung der Freifläche der Messerplatte der Anfangsverschleiß praktisch gänzlich vermieden wird. Der Verschleiß der Messerplatte bleibt über deren gesamten Standweg im wesentlichen gleich.

Nach allem wird deutlich, daß die Reibahle auch mit mehreren -in Längsachse der Reibahle gesehen- hintereinanderliegenden Messerplatten ausgerüstet sein kann. Diesen mehreren Messerplatten können dann zwei Führungsleisten Zugeordnet sein, wie dies anhand von Figur 5 erläutert wurde.

Es ist schließlich auch möglich, daß die Reibahle als Stufenreibahle ausgebildet ist, wobei mehrere Messerplatten vorgesehen sind, die der Bearbeitung einer Stufenbohrung dienen und die alle entsprechend der oben dargestellten Beschreibung ausgebildet sind.

In allen Fällen zeigt sich das gleiche Phänomen: Der Anfangsverschleiß der Messerplatten, der bei herkömmlichen Werkzeugen während einer Standzeit bis zu 1 m besonders ausgeprägt ist, unterscheidet sich praktisch nicht von dem Verschleiß, der während eines Standwegs von 1 m bis 6 m gegeben ist. In allen Fällen kann die besonders ausgestaltete Freifläche, insbesondere deren zusätzlicher Freiflächenbereich, der sich durch den sehr kleinen Freiwinkel auszeichnet, als zusätzliche Führungsfläche dienen, die der optimalen Stabilisierung des Werkzeugs in der zu bearbeitenden Bohrung dient. Durch die Vermeidung des besonders großen Anfangsverschleisses kann der Überstand der aktiven Schneide der Messerplatte über die Führungsleisten minimiert werden, so daß die beschriebene Kippbewegung des Werkzeugs in allen Fällen stark reduzierbar ist, so daß die Geometrie und die Oberflächengüte der zu bearbeitenden Bohrung höchsten Ansprüchen gerecht werden.

## Patentansprüche

1. Reibahle mit mindestens einer Messerplatte (1) und mit zwei dieser zugeordneten Führungsleisten (39, 43), wobei die Messerplatte (1) mindestens eine Hauptschneide (3) und eine an diese angrenzende Nebenschneide (5) aufweist und im Bereich der Hauptschneide (3) und Nebenschneide (5) eine Freifläche (17) vorgesehen ist, die im Bereich der Nebenschneide (5) einen ersten unter einem Freiwinkel von ca. 7° abfallenden Freiflächenbereich (19) aufweist, **gekennzeichnet durch** einen der Nebenschneide (5, 5'; 50) zugeordneten zweiten zusätzlichen Freiflächenbereich (23) der sich unmittelbar an die Nebenschneide anschließt, in den ersten Freiflächenbereich (19) übergeht und einen Freiwinkel aufweist, der wesentlich kleiner ist als der des ersten Freiflächenbereichs (19).

2. Reibahle nach Anspruch 1, **dadurch gekennzeichnet**, daß der Freiwinkel des zweiten zusätzlichen Freiflächenbereichs (23) 0,5° bis 1,5°, vorzugsweise ca. 1° beträgt.

3. Reibahle nach Anspruch 1 oder 2, **dadurch gekennzeichnet**, daß die -quer zum Verlauf der Nebenschneide (5, 5'; 50) gemessene- Breite (b₂) des zweiten zusätzlichen Freiflächenbereichs (23) ca. 6/100 mm bis 1/10 mm vorzugsweise 8/100 mm beträgt.

4. Reibahle nach einem der Ansprüche 1 bis 3, **dadurch gekennzeichnet**, daß ein dritter Freiflächenbereich (25) vorgesehen ist, der sich an den ersten Freiflächenbereich (19) anschließt und einen Freiwinkel aufweist, der größer ist als der des ersten Freiflächenbereichs (19) und vorzugsweise ca. 15° beträgt.

5. Reibahle nach einem der vorhergehenden Ansprüche, **dadurch gekennzeichnet**, daß die Messerplatte (1) im wesentlichen rechteckförmig ausgebildet ist und die Nebenschneide (5; 5') entlang ihrer Längskante (13, 13') verläuft.

6. Reibahle nach Anspruch 5, **dadurch gekennzeichnet**, daß die Messerplatte (1) als Wendeplatte ausgebildet ist und an diagonal gegenüberliegenden Ecken eine Hauptschneide (3; 3') aufweist, die in die zugehörige Nebenschneide (5; 5') übergeht.

7. Reibahle nach einem der Ansprüche 1 bis 4, **dadurch gekennzeichnet**, daß die Messerplatte (10) als Vieleck mit vorzugsweise sechs Ecken ausgebildet ist, wobei jede Ecke als Hauptschneide (30) dient, an die sich eine Nebenschneide (50) anschließt.

## Claims

1. A reamer comprising at least one blade insert (1) and two guide strips (39, 43) associated therewith, wherein the blade insert (1) has at least one primary cutter (3) and a secondary cutter (5) adjoining thereto, and in the region of the primary cutter (3) and the secondary cutter (5) a flank (17) is provided which, in the region of the secondary cutter (5), has a first flank region (19) sloping at a clearance angle of about 7°, characterised by a second, additional flank region (23), associated with the secondary cutter (5, 5'; 50), which immediately adjoins the secondary cutter, extends into the first flank region (19) and has a clearance angle which is substantially smaller than that of the first flank region (19).

2. A reamer according to claim 1, characterised in that the clearance angle of the second additional flank region (23) is 0.5° to 1.5°, preferably about 1°.

3. A reamer according to claim 1 or 2, characterised in that the width (b₂) of the second, additional flank region (23), measured transversely to the direction of the secondary cutter (5, 5'; 50), is about 6/100 mm to 1/10 mm, preferably 8/100 mm.

4. A reamer according to one of claims 1 to 3, characterised in that a third flank region (25) is provided adjoining the first flank region (19) and having a clearance angle which is greater than that of the first flank region (19) and is preferably about 15°.

5. A reamer according to one of the preceding claims, characterised in that the blade insert (1) is essentially rectangular and the secondary cutter (5, 5') extends along its longitudinal edge (13, 13').

6. A reamer according to claim 5, characterised in that the blade insert (1) is a reversible insert and has a primary cutter (3; 3') on diagonally opposite corners which extends into the associated secondary cutter (5; 5').

7. A reamer according to one of claims 1 to 4, characterised in that the blade insert (10) is a polygon with preferably six vertices, each vertex serving as a primary cutter (30) which a secondary cutter (50) adjoins.

## Revendications

1. Alésoir équipé d'au moins une plaquette de coupe (1) et de deux baguettes de guidage (39, 43) associées à la plaquette, celle-ci comportant au moins une arête principale de coupe (3) suivie d'une arête auxiliaire adjacente de coupe (5), une face de dépouille (17) étant prévue dans la zone des arêtes (3) et auxiliaire (5)et présentant, près de l'arête auxiliaire (5) une première face de dépouille (19) rabattue selon un angle de dépouille d'environ 7°,
caractérisé en ce qu'
une seconde zone de la face auxiliaire (23) de la face de dépouille, associée à l'arête auxiliaire, (5, 5', 50) se raccorde directement à celle-ci tandis qu'elle se prolonge dans la première zone de la face de dépouille (19) selon un angle de dépouille nettement plus petit que celui de la première zone de la face de dépouille (19).

2. Alésoir selon la revendication 1,
caractérisé en ce que
l'angle de dépouille de la seconde zone de la face auxiliaire (23) de la face de dépouille est compris entre 0,5 et 1,5 °, de préférence environ 1°.

3. Alésoir selon la revendication 1 ou 2,
caractérisé en ce que
la largeur (b₂), mesurée perpendiculairement à l'arête auxiliaire (5, 5' ; 50), de la seconde zone de la face auxiliaire (23) de la face de dépouille est comprise entre 6/100 mm et 1/10 mm, de préférence 8/100 mm.

4. Alésoir selon l'une des revendications précédentes,
caractérisé en ce qu'
il est prévu une troisième zone de la face (25) de dépouille, raccordée à la première zone de la face de dépouille (19) et présentant un angle de dépouille supérieur à celui de la première zone de la face de dépouille (19) et de préférence égal à 15° environ.

5. Alésoir selon l'une des revendications,
caractérisé en ce que
la plaquette de coupe (1) présente essentiellement une forme rectangulaire, l'arête auxiliaire de coupe (5 ; 5') étant située le long de son bord longitudinal (13, 13').

6. Alésoir selon la revendication 5,
caractérisé en ce que
la plaquette de coupe (1) est réalisée sous la forme d'une plaque réversible et présente à l'angle opposé en diagonale, une arête principale de coupe (3 ; 3') qui se prolonge dans l'arête auxiliaire associée (5 ; 5').

7. Alésoir selon une des revendications 1 à 4,
caractérisé en ce que
la plaquette de coupe (10) est un polygone, de préférence un hexagone dont chaque angle sert d'arête principale de coupe (30) à laquelle se raccorde une arête auxiliaire (50).
